# EUROPEAN PATENT APPLICATION

(11) **EP 4 180 735 A1**
(43) Date of publication of application: **17.05.2023**
(21) Application number: 21838310.7
(22) Date of filing: 30.06.2021
(51) Int. Cl.: F24F 8/10, F24F 13/20, F24F 11/70, B01D 47/02, B03C 3/38, B03C 3/45, F24F 8/117

(54) **WAVY VORTEX AIR PURIFIER**

(30) Priority: 07.07.2020 KR 20200083355
(71) Applicant: Gonggong Co., Ltd., Seoul 04788 (KR)
(72) Inventor: LEE, Sun Un, Seoul 06964 (KR)
(74) Representative: Frenkel, Matthias Alexander
(86) International application number: PCT/KR2021/008233
(87) International publication number: WO 2022/010164

(57) **Abstract**

The disclosure relates to a wave vortex air purifier. The wave vortex air purifier according to an embodiment includes an air inhaler configured to inhale air from an outside; a liquid storage configured to accommodate liquid for collecting contaminants contained in intake air inhaled through the air inhaler; a liquid fluidizer placed inside the liquid storage and configured to rotate inside the liquid storage to rotate the liquid in the liquid storage and cause an upwelling phenomenon that a level of the liquid changes; a rotary driver configured to rotate the liquid fluidizer; and an air discharger configured to discharge purified air, from which the contaminants are removed, to the outside.

## Description

### [TECHNICAL FIELD]

The disclosure relates to a wave vortex air purifier.

### [BACKGROUND ART]

With development of industry, the amount of fine dust in air is increasing due to air pollution such as industrial dust, car exhaust fumes, and yellow dust. The number of days when the amount of fine dust exceeds a recommended threshold is increasing, thereby restricting outdoor activities as well as daily life. When a person is exposed to the fine dust for a long time, heavy metals contained in the fine dust enter his/her body and adversely affect health. In addition, when ventilation is performed to eject scattered dust or carbon dioxide caused by indoor activities at home, fine dust in outdoor air may be introduced and lower indoor air quality, thereby further adversely affecting health of children, bronchial patients, etc.

To purify polluted indoor air by collecting harmful substances such as dust generated indoors or fine dust introduced from the outside and discharge the purified air, various air purifiers have been developed and marketed.

The air purifier may be broadly classified into a dry air purifier and a wet air purifier. The dry air purifier is configured to use a filter for physically filtering fine dust or a dust collector for electrically collecting fine dust or use both of them together, thereby purifying air. The wet air purifier is configured to bring intake air into contact with water or the like wet purifying agent so that contaminants such as fine dust or harmful gas can be precipitate or dissolved, thereby purifying air.

### [TECHNICAL PROBLEM]

In the case of the dry air purifier, it is necessary to periodically replace or clean the filter or the dust collector. When the filter or the dust collector is periodically replaced, extra costs are incurred to replace the filter or the dust collector and may impose an economic burden on a user. Further, when the filter of the dust collector is periodically cleaned, it may cumbersome for a user to wash and dry the filter or the dust collector.

In the case of the wet air purifier, water generated from the wet purifying agent increases indoor humidity, and bacteria such as mold are likely to propagate, thereby causing a hygiene problem. Further, when a contact area between the air containing fine dust and the wet purifying agent is small, the air purifying capacity of the wet air purifier may be lowered. In particular, when the wet purifying agent is prepared to perform purification in a static state, a container for containing the wet purifying agent is likely to be contaminated and internally incrusted with slime.

Embodiments of the disclosure improve or solve at least some problems of the conventional dry and wet air purifiers. To this end, the plurality of embodiments provides a wave vortex air purifier that does not require a filter or a dust collector to be replaced or cleaned and has a large contact area between air and a wet purifying agent without increasing indoor humidity relatively.

### [TECHNICAL SOLUTION]

Embodiments according to an aspect of the disclosure are related to a wave vortex air purifier. According to an exemplary embodiment, the wave vortex air purifier includes an air inhaler configured to inhale air from an outside; a liquid storage configured to accommodate liquid for collecting contaminants contained in intake air inhaled through the air inhaler; a liquid fluidizer placed inside the liquid storage and configured to rotate inside the liquid storage to rotate the liquid in the liquid storage and cause an upwelling phenomenon that a level of the liquid changes; a rotary driver configured to rotate the liquid fluidizer; and an air discharger configured to discharge purified air, from which the contaminants are removed, to the outside. The liquid fluidizer includes a rotary body including an upper surface inclined with respect to a bottom wall of the liquid storage and configured to be rotated by the rotary driver; and a plurality of protrusions protruding from the upper surface and disposed as being spaced apart from each other along a circumferential direction of the upper surface. The rotary body includes a lower surface inclined with respect to the upper surface and parallel to the bottom wall.

According to an embodiment, each of the plurality of protrusions may include an inclined surface disposed to be inclined with respect to the upper surface and coming into contact with the liquid as the rotary body rotates.

According to an embodiment, the wave vortex air purifier may further include a controller that controls the rotary driver to adjust a rotation speed of the liquid fluidizer.

According to an embodiment, the wave vortex air purifier may further include an electric precipitator that electrically collects the contaminants.

According to an embodiment, the electric precipitator may include an ionizer disposed adjacent to the air inhaler and charging the contaminants; and a collector cell configured to collect the contaminants charged in the ionizer based on electrostatic action.

According to an embodiment, the liquid storage may include a cylindrical inner circumferential surface, and the collector cell may be disposed along the cylindrical inner circumferential surface so as to be at least partially immersed in the liquid as the liquid upwells.

According to an embodiment, the collector cell may be disposed on the cylindrical inner circumferential surface between a maximum level of the liquid and a minimum level of the liquid due to the rotation of the liquid fluidizer.

According to an embodiment, the air inhaler may be configured to swirl the intake air in a direction opposite to a rotation direction of the liquid.

According to an embodiment, the liquid storage may include a cylindrical inner circumferential surface, and the air inhaler may include an introducing inlet disposed so that the intake air can flow toward the cylindrical inner circumferential surface.

According to an embodiment, the air inhaler may include a driving motor including a rotary shaft; and an inhaling fan coupled to the rotary shaft and configured to inhale air from the outside.

According to an embodiment, the wave vortex air purifier may further include a controller that controls the driving motor to adjust a rotation speed of the inhaling fan.

According to an embodiment, the air discharger may include a pipelike partition wall extending toward an inside of the liquid storage.

According to an embodiment, the wave vortex air purifier may further include a cooler configured to lower temperature of the liquid accommodated in the liquid storage.

According to another exemplary embodiment, a wave vortex air purifier includes an air inhaler configured to inhale air from an outside; a liquid storage configured to accommodate liquid for collecting contaminants contained in intake air inhaled through the air inhaler; a liquid fluidizer placed inside the liquid storage and configured to rotate the liquid in the liquid storage; a rotary driver disposed outside the liquid storage, spaced apart from the liquid fluidizer, and configured to rotate the liquid fluidizer; and an air discharger configured to discharge purified air, from which the contaminants are removed, to the outside. The liquid fluidizer may include a rotary body including an upper surface inclined with respect to a bottom wall of the liquid storage and configured to be rotated by the rotary driver; and a plurality of protrusions protruding from the upper surface and disposed as being spaced apart from each other along a circumferential direction of the upper surface. The rotary body may include a lower surface inclined with respect to the upper surface and parallel to the bottom wall.

According to an embodiment, the rotary driver may include a rotational driving motor including a rotary shaft; and a driving plate coupled to the rotary shaft and configured to rotate.

According to an embodiment, the liquid fluidizer may be configured to rotate together with the driving plate by magnetic attraction between the liquid fluidizer and the driving plate.

According to an embodiment, the wave vortex air purifier may further include a magnetic body coupled to one of the liquid fluidizer and the driving plate; and a metal member coupled to the other of the liquid fluidizer and the driving plate.

According to an embodiment, the magnetic body may be coupled to one of a lower surface of the liquid fluidizer and an upper surface of the driving plate, and the metal member may be coupled to the other of the lower surface of the liquid fluidizer and the upper surface of the driving plate.

According to an embodiment, the magnetic body may include a plurality of magnetic bodies coupled to one of the lower surface of the liquid fluidizer and the upper surface of the driving plate and disposed to be spaced apart from each other along a circumferential direction, and the metal member may include a plurality of metal members coupled to the other of the lower surface of the liquid fluidizer and the upper surface of the driving plate and disposed to be spaced apart from each other along a circumferential direction.

According to another exemplary embodiment, a wave vortex air purifier includes an air inhaler including a driving motor and an inhaling fan for inhaling air from an outside, and configured to swirl intake air through the inhaling fan; a liquid storage configured to accommodate liquid for collecting contaminants contained in the intake air inhaled through the air inhaler; a liquid fluidizer placed inside the liquid storage and configured to rotate the liquid in the liquid storage in a direction opposite to a swirling direction of the intake air; a rotary driver configured to rotate the liquid fluidizer; an air discharger configured to discharge purified air, from which the contaminants are removed, to the outside; and a controller configured to control the driving motor and the rotary driver so that a rotation speed of the intake air swirled by the air inhaling fan can be faster than a rotation speed of the liquid. The liquid fluidizer includes a rotary body including an upper surface inclined with respect to a bottom wall of the liquid storage and configured to be rotated by the rotary driver; and a plurality of protrusions protruding from the upper surface and disposed as being spaced part from each other along a circumferential direction of the upper surface. The rotary body includes a lower surface inclined with respect to the upper surface and parallel with the bottom wall.

### [ADVANTAGEOUS EFFECTS]

In a wave vortex air purifier according to an embodiment, a liquid fluidizer is configured to rotate liquid stored in a liquid storage and cause an upwelling phenomenon that the level of the liquid changes, so that contaminants contained in intake air introduced through an air inhaler can be collected in the rotating liquid. Therefore, it is not necessary to replace or clean a filter or a dust collector, thereby improving user convenience. Further, a contact area between intake air and liquid is increased without increasing indoor humidity relatively. Accordingly, a rate of collecting contaminants may be increased.

### [DESCRIPTION OF DRAWINGS]

FIG. 1 is a perspective view illustrating a wave vortex air purifier according to an embodiment of the disclosure.
FIG. 2 is a cross-sectional view taken along line II-II of FIG. 1.
FIG. 3 is a perspective view illustrating a liquid storage and a liquid fluidizer shown in FIG. 1.
FIG. 4 is a perspective view illustrating the liquid fluidizer shown in FIG. 3.
FIG. 5 is a partial cross-sectional view illustrating a liquid storage and a liquid fluidizer according to another embodiment.
FIG. 6 is a block diagram schematically showing the configuration of a wave vortex air purifier according to an embodiment of the disclosure.
FIG. 7 is a perspective view illustrating a liquid storage and a liquid fluidizer according to another embodiment.
FIG. 8 is a cross-sectional view of the wave vortex air purifier shown in FIG. 2, schematically illustrating an electric precipitator.
FIG. 9 is a perspective view illustrating the liquid storage and the collector cell shown in FIG. 8.
FIG. 10 is a cross-sectional view taken along line X-X shown in FIG. 2.
FIG. 11 is a cross-sectional view illustrating a wave vortex air purifier according to another embodiment of the disclosure.
FIG. 12 is a partial enlarged view taken from 'A' shown in FIG. 11.
FIG. 13 is a partial cross-sectional view illustrating a liquid fluidizer and a driving plate according to another embodiment.
FIG. 14 is a cross-sectional view illustrating a wave vortex air purifier according to still another embodiment of the disclosure.

### [BEST MODE]

Embodiments of the disclosure are illustrated for the purpose of describing the technical idea of the disclosure. The scope of the disclosure is not limited to the embodiments set forth herein or the detailed description of such embodiments.

All the technical and scientific terms used in the disclosure have meanings generally understood by a person having ordinary knowledge in the art to which the disclosure pertains, unless otherwise defined. All the terms used in the disclosure are selected for the purpose of more clearly describing the disclosure but not for limiting the scope of the disclosure.

The expressions "include," "comprise," "have," etc. used in the disclosure should be understood as open-ended terms implying possibility of encompassing other embodiments, unless otherwise mentioned in the phrase or sentence containing the such expressions.

The singular form used in the disclosure are intended to include plural forms unless otherwise mentioned, which applies equally to the singular form in the claims.

The terms "first," "second," etc. used in the disclosure are used to distinguish a plurality of elements from one another, but not intended to limit the sequence or importance of those elements.

The term "unit" used in the disclosure means a software element or a hardware element such as a field-programmable gate array (FPGA) and an application specific integrated circuit (ASIC). However, the "unit" is not limited to the hardware and the software. The "unit" may be configured to be in an addressable storage medium, or may be configured to run one or more processors. Therefore, as an example, the "unit" includes elements such as software elements, objectoriented software elements, class elements, and task elements, and processors, functions, attributes, procedures, subroutines, segments of program codes, drivers, firmware, microcodes, circuits, data, databases, data structures, tables, arrays, and variables. The function provided in the elements and "units" may be combined into a smaller number of elements and "units" or subdivided into additional elements and "units."

In the disclosure, when a certain element is described as being "connected" or "coupled" to another element, it should be understood that the certain element may be connected or coupled to the other element directly or via a new intervening element.

The directional terms "above", "upper," etc. used in the disclosure are based on a direction, in which a liquid storage is positioned relative to a rotary driver in the accompanying drawings, while the directional terms "below," "lower," etc. refer to a direction opposite to the upward or upper direction. The liquid storage and the rotary driver shown in the accompanying drawings may be oriented otherwise, and the foregoing directional terms may be interpreted accordingly.

Below, embodiments of the disclosure will be described with reference to the accompanying drawings. In the accompanying drawings, like reference symbols denote like or corresponding elements. Further, in the following descriptions of the embodiments, repetitive descriptions for the same or corresponding elements may be omitted. Although the descriptions of the elements are omitted, such elements are not intended to be excluded in any embodiment.

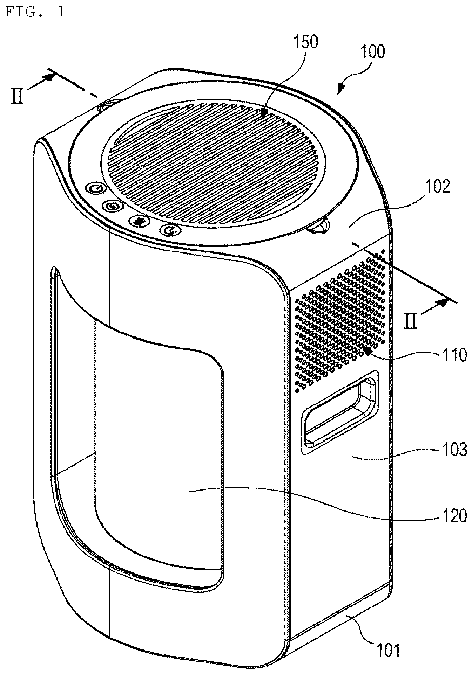

FIG. 1 is a perspective view illustrating a wave vortex air purifier according to an embodiment of the disclosure.

Referring to FIG. 1, a wave vortex air purifier 100 according to an embodiment of the disclosure may include an air inhaler 110, a liquid storage 120, a liquid fluidizer 130, a rotary driver 140, and an air discharger 150. The wave vortex air purifier 100 may include a housing as a casing that forms an outer appearance of the wave vortex air purifier 100.

The housing includes a first housing 101 forming a lower portion of the wave vortex air purifier 100, a second housing 102 spaced apart upward from the first housing 101 and forming an upper portion of the wave vortex air purifier 100, and a third housing 103 connecting the first housing 101 and the second housing 102. The third housing 103 may be provided as one or more pillars spaced apart from each other along a circumferential direction. The first to third housings 101 to 103 may be formed as a single body, or may be manufactured separately and then coupled to one another.

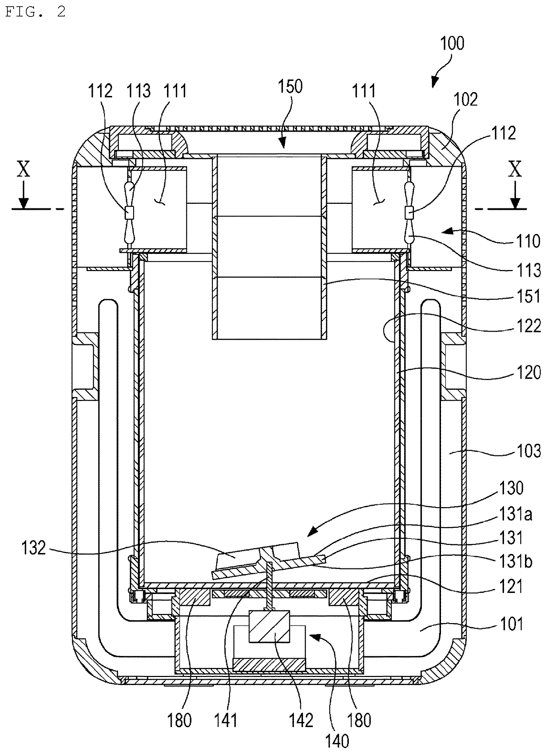

FIG. 2 is a cross-sectional view taken along line II-II of FIG. 1.

As shown in FIG. 2, the air inhaler 110 is provided in the third housing 103. The air inhaler 110 is configured to inhale air from the outside. For example, the air inhaler 110 may be configured to forcibly make air be inhaled from the outside and flow into the liquid storage 120. The wave vortex air purifier 100 may include one or more third housing 103, and one or more air inhalers 110 provided in the one or more third housing 103, respectively.

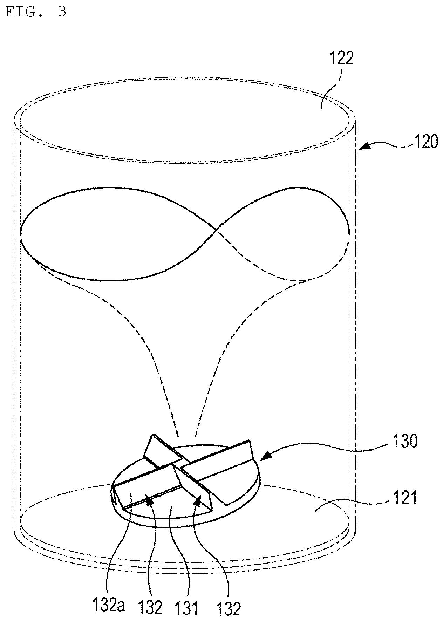

FIG. 3 is a perspective view illustrating the liquid storage and the liquid fluidizer shown in FIG. 1.

As shown in FIG. 3, the liquid storage 120 may be provided as a cylindrical container to accommodate the liquid therein. Alternatively, the liquid storage 120 may be provided as various containers shaped like a polygonal pillar. The liquid storage 120 accommodates liquid for collecting contaminants contained in the air inhaled through the air inhaler 110. The contaminants contained in the intake air may for example include fine dust (PM10, PM2.5, etc.), formaldehyde, radon, hydrocarbon, nitrogen oxide, sulfur oxide, heavy metal, carbon monoxide, etc. The liquid storage 120 is disposed above the first housing 101 within a space formed by the first to third housings 101 to 103. When the wave vortex air purifier 100 includes two or more third housings 103, the two or more third housings 103 may be disposed as spaced apart from each other in a circumferential direction of the liquid storage 120. The liquid storage 120 may be made of a transparent material. In this case, it is possible to visually check how much the contaminants are collected in the liquid stored in the liquid storage 120 and when the liquid needs to be replaced.

The liquid stored in the liquid storage 120 may include water, oil, ether, and the like liquid, which has a low vapor pressure, to collect contaminants contained in the intake air. According to an embodiment, the liquid may be added with additives to improve its capacity for collecting the contaminants. For example, the additives may include surfactant, salt, sugar, coffee, starch, and the like material for reducing the vapor pressure due to increase in a mixture ratio.

The liquid fluidizer 130 is disposed inside the liquid storage 120. For example, the liquid fluidizer 130 is configured to rotate on a bottom wall 121 of the liquid storage 120. The liquid fluidizer 130 is configured to rotate inside the liquid storage 120 and cause an upwelling phenomenon that the level of the liquid changes. The upwelling phenomenon is caused by Ekman transport as the liquid turns. When the upwelling phenomenon occurs, the level of the liquid is varied along the circumferential direction. In other words, the surface where the liquid is in contact with the liquid storage 120 has a waveform or a sinusoidal form. In this way, the upwelling phenomenon is caused to enlarge a contact area between the surface of the liquid and the intake air. As a result, the rate of collecting the contaminants increases. Further, as the liquid rotates, a vortex is formed in the liquid of which the level becomes lower in a center region of a rotary body 131 and higher in a radially outer region of the rotary body 131. In other words, the level of the liquid may form a V-shaped longitudinal section. Therefore, the contact area between the intake air and the liquid is enlarged. Because the upwelling phenomenon of the liquid and the vortex occur simultaneously, the contact area between the intake air and the liquid is further enlarged. In consequence, the wave vortex air purifier 100 is further improved in efficiency of purifying air. The liquid rotated by the liquid fluidizer 130 has an effect on cleaning the inside of the liquid storage 120, and therefore the inside of the liquid storage 120 is significantly decreased in contamination and hardly incrusted with slime. Accordingly, it is very convenient for a user to manage the wave vortex air purifier 100.

The rotary driver 140 is configured to rotate the liquid fluidizer 130. The rotary driver 140 may be provided in the first housing 101. For example, the rotary driver 140 may include a rotational driving motor 142 with a rotary shaft 141. The rotary shaft 141 may be directly inserted into the liquid fluidizer 130 while passing through the bottom wall 121 of the liquid storage 120. In this case, a sealing member (e.g., an O-ring) may be interposed between the rotary shaft of the electric motor and the bottom wall 121 of the liquid storage 120 to prevent the liquid from leaking.

The air discharger 150 is configured to discharge the purified air, from which the contaminants are removed, to the outside. The air discharger 150 may be provided in the second housing 102. The air inhaler 110 and the air discharger 150 may be disposed to face in different directions from each other so that the intake air including contaminants and inhaled through the air inhaler 110 and the purified air discharged through the air discharger 150 can be prevented from mixing with each other. For example, the air inhaler 110 may be configured to inhale the intake air from the lateral sides of the third housing 103, and the air discharger 150 may be configured to discharge the purified air upwards from the second housing 102.

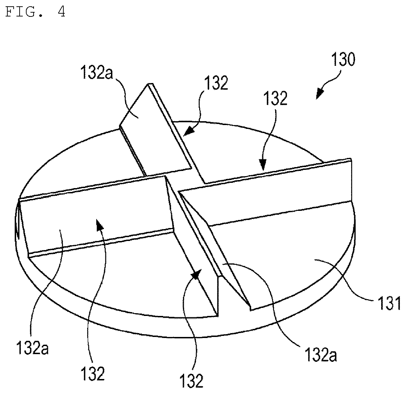

FIG. 4 is a perspective view illustrating the liquid fluidizer shown in FIG. 3.

As shown in FIG. 4, according to an embodiment, the liquid fluidizer 130 may include the rotary body 131 and a plurality of protrusions 132. The rotary body 131 includes an upper surface 131a inclined with respect to the bottom wall 121 of the liquid storage 120 and is rotated by the rotary driver 140. The rotary body 131 has the inclined upper surface 131a, thereby causing the upwelling phenomenon. The plurality of protrusions 132 protrude from the upper surface 131a and are disposed as being spaced apart from each other along the circumferential direction of the upper surface 131a. The plurality of protrusions 132 are equidistantly arranged along the circumferential direction of the upper surface 131a. The plurality of protrusions 132 serves to form a vortex in the liquid stored in the liquid storage 120.

According to an embodiment, the rotary body 131 may have a lower surface 131b in parallel with the upper surface 131a. For example, the rotary body 131 is shaped like a disk having the upper surface 131a and the lower surface 131b which are disposed parallel to each other. In this case, the rotary body 131 shaped like a disk is installed to be inclined with respect to the bottom wall 121 of the liquid storage 120 ad configured to rotate.

According to an embodiment, each of the plurality of protrusions 132 may include an inclined surface 132a that is disposed to be inclined with respect to the upper surface 131a and coming into contact with the liquid as the rotary body 131 rotates. As the rotary body 131 rotates, the liquid relatively climbs over the protrusion 132. The inclined surface 132a provided in the protrusion 132 allows the liquid to climb over the protrusion 132 smoothly without striking the protrusion 132. Therefore, it is possible to suppress or prevent noise due to collision between the protrusion 132 and the liquid and reduce a load transmitted to the rotary driver 140.

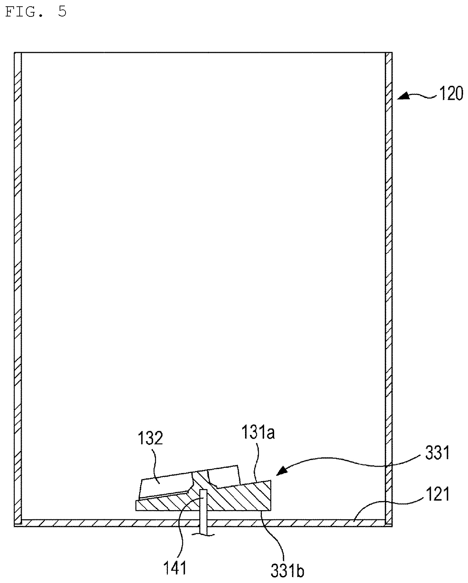

FIG. 5 is a partial cross-sectional view illustrating a liquid fluidizer according to another embodiment.

As shown in FIG. 5, according to an embodiment, a rotary body 331 may have a lower surface 331b inclined with respect to the upper surface 131a and parallel to the bottom wall 121. For example, the rotary body 331 may be shaped like an inclinedly truncated cylinder. In this case, the upper surface 131a of the rotary body 131 rotates while being inclined with respect to the bottom wall 121, and the lower surface 131b of the rotary body 131 rotates while being parallel to the bottom wall 121.

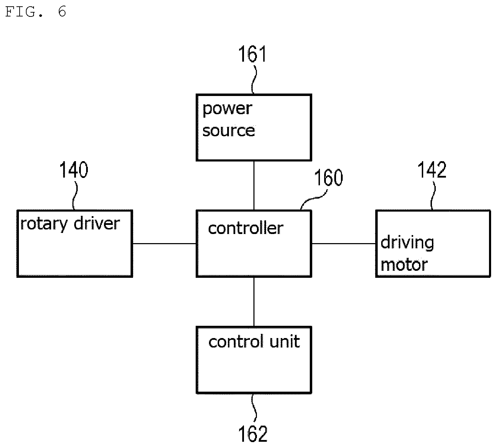

FIG. 6 is a block diagram schematically showing the configuration of the wave vortex air purifier according to an embodiment of the disclosure.

As shown in FIG. 6, according to an embodiment, the wave vortex air purifier 100 may further include a controller 160 that controls the rotary driver 140 to adjust the rotation speed of the liquid fluidizer 130. The controller 160 may be connected to the rotary driver 140 wirelessly or by a wire. The controller 160 is electrically connected to a power source 161 for driving the rotary driver 140, and a control unit 162 for controlling the air rotary driver 140. When the rotation speed of the liquid fluidizer 130 is adjusted, a difference between the levels of the liquid that rotates in the liquid storage 120 is also adjustable. Accordingly, the contact area between the liquid and the intake air is adjusted, thereby controlling the rate and the amount at which the liquid collects the contaminants contained in the intake air. For example, when a large amount of contaminants is contained in the intake air, the controller 160 may control the rotary driver 140 to raise the rotation speed of the liquid and temporarily increase the collection rate and amount for the contaminants. On the other hand, when a small amount of contaminants is contained in the intake air, the controller 160 controls the rotary driver 140 to slow down the rotation speed of the liquid and to temporarily decrease the collection rate and amount for the contaminants.

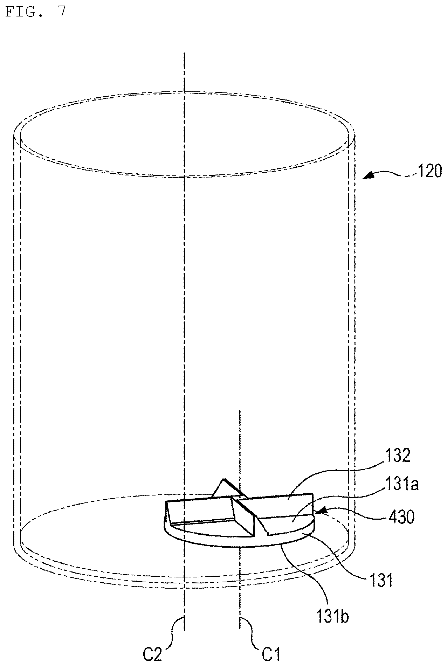

FIG. 7 is a perspective view illustrating a liquid storage and a liquid fluidizer according to another embodiment.

According to an embodiment, a liquid fluidizer 430 may include a rotary body 131 and a plurality of protrusions 132. The rotary body 131 includes an upper surface 131a and a lower surface 131b parallel to the bottom wall 121 of the liquid storage 120 and is rotated by the rotary driver 140. The plurality of protrusions 132 protrude from the upper surface 131a and are disposed as being spaced apart from each other along the circumferential direction of the upper surface 131a. The rotary center C1 of the rotary body 131 is disposed eccentrically to the center C2 of the bottom wall 121 of the liquid storage 120. In this case, it is not necessary to make at least one of the upper surface 131a and the lower surface 131b of the rotary body 131 be inclined with respect to the bottom wall 121, and the upwelling phenomenon of the liquid is caused by the eccentrically disposed rotary center of the rotary body 131. When the rotary body 131 is disposed in parallel to the bottom wall 121, it is possible to simplify the structure of the rotary body 131 and it is also easy to install the rotary body 131 onto the bottom wall 121 of the liquid storage 120.

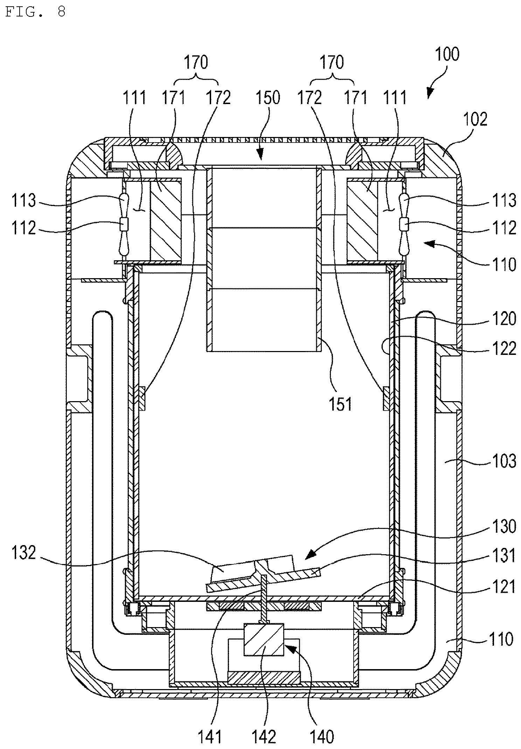

FIG. 8 is a cross-sectional view of the wave vortex air purifier shown in FIG. 2, schematically illustrating an electric precipitator.

According to an embodiment, the wave vortex air purifier 100 may further include an electric precipitator 170 that electrically collects contaminants. The electric precipitator 170 is configured to electrically charge floating particles contained in the intake air and separate the floating particles from the air based on an electrostatic force. For example, the electric precipitator 170 may be configured to collect dust particles charged by corona discharge.

According to an embodiment, the electric precipitator 170 may include an ionizer 171 and a collector cell 172. The ionizer 171 is disposed adjacent to the air inhaler 110 ad configured to charge contaminants. In other words, the ionizer 171 causes the corona discharge to charge the contaminants while the intake air inhaled through the air inhaler 110 passes therethrough. The collector cell 172 is configured to collect the contaminants charged in the ionizer 171 based on electrostatic action. The contaminants collected on the collector cell 172 may be washed with water and the like liquid.

According to an embodiment, the liquid storage 120 may include a cylindrical inner circumferential surface 122, and the collector cell 172 may be disposed along the cylindrical inner circumferential surface 122 so as to be at least partially immersed in the liquid as the liquid upwells. In a state that the collector cell 172 is immersed in the liquid inside the liquid storage 120, the contaminants collected on the collector cell 172 are washed with the liquid of the liquid storage 120. In a state that the collector cell 172 emerges from the liquid inside the liquid storage 120, the collector cell 172 is configured to dry and collect the charged contaminants. The collector cell 172 is fixedly disposed and alternates between the immersed sate and the emerged state as the liquid upwells. Thus, the collector cell 172 alternates between cleaning and dust collection, and it is therefore not necessary to separate and separately clean the collector cell 172.

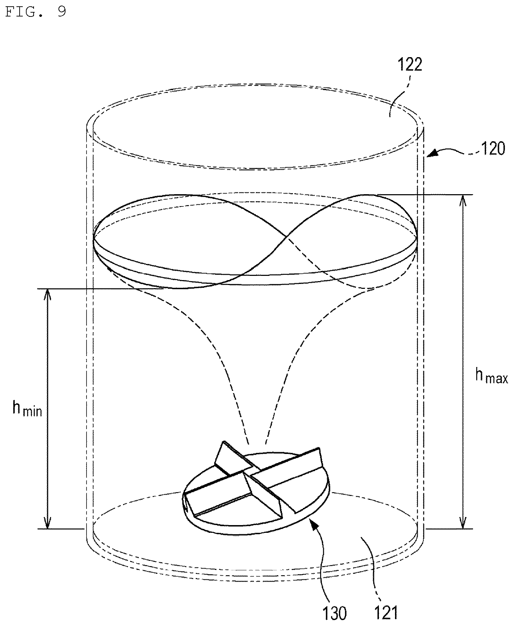

FIG. 9 is a perspective view illustrating the liquid storage and the collector cell shown in FIG. 8.

As shown in FIG. 9, according to an embodiment, the collector cell 172 may be disposed on the cylindrical inner circumferential surface 122 between the maximum level hₘₐₓ of liquid and the minimum level hₘᵢₙ of liquid due to the rotation of the liquid fluidizer 130. In this way, the collector cell 172 is disposed between the maximum level hₘₐₓ and the minimum level hₘᵢₙ of liquid, and therefore a difference between a degree to which the collector cell 172 is immersed a degree to which the collector cell 172 emerges increases. Therefore, the efficiency of cleaning the collector cell 172 and the efficiency of collecting dust on the collector cell 172 are maximized according to the upwelling phenomenon of the liquid.

According to an embodiment, the air inhaler 110 may be configured to swirl the intake air in a direction opposite direction of the rotation direction of the liquid. As the intake air swirls in the opposite direction to the rotation direction of the liquid, a relative impact amount of a collision between the intake air and the liquid may increase. Therefore, the efficiency of collecting the contaminants of the intake air in the liquid is increased. In this embodiment, the swirling speed of the intake air is controlled to be faster than the rotation speed of the liquid, thereby causing the upwelling phenomenon of the liquid.

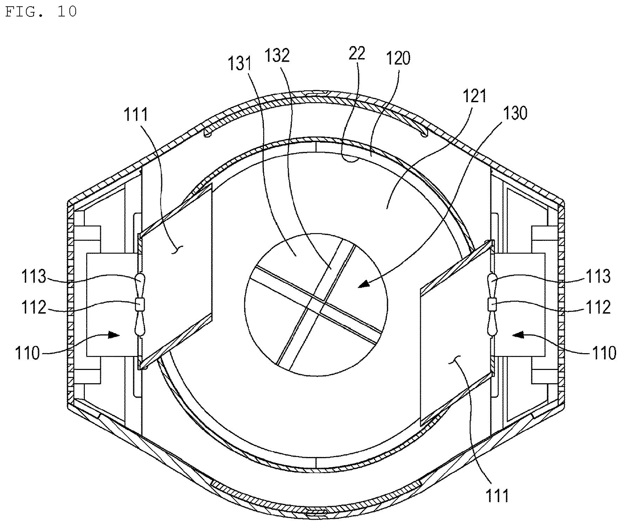

FIG. 10 is a cross-sectional view taken along line X-X shown in FIG. 2.

As shown in FIG. 10, according to an embodiment, the liquid storage 120 may include the cylindrical inner circumferential surface 122, and the air inhaler 110 may include an introducing inlet 111 disposed so that the intake air can flow toward the cylindrical inner circumferential surface 122. Therefore, the intake air inhaled through the introducing inlet 111 flows toward the cylindrical inner circumferential surface 122 and comes into contact with the cylindrical inner circumferential surface 122, thereby flowing spirally and forming a vortex. For example, a plurality of introducing inlets 111 may be provided to form a strong vortex.

According to an embodiment, the air inhaler 110 maya include a driving motor 112 and an inhaling fan 113. The driving motor 112 has a rotary shaft, and the inhaling fan 113 is coupled to the rotary shaft. The inhaling fan 113 is configured to inhale air from the outside. In other words, the inhaling fan 113 is configured to introduce the intake air into the liquid storage 120. For example, the driving motor 112 and the inhaling fan 113 may be installed inside the introducing inlet 111. In this way, the air inhaler 110 includes the driving motor 112 and the inhaling fan 113 to forcibly inhale the intake air into the liquid storage 120, thereby increasing the amount of intake air inhaled into the liquid storage 120. In consequence, the wave vortex air purifier 100 is improved in purification efficiency.

According to an embodiment, the wave vortex air purifier 100 may further include the controller 160 that controls the driving motor 112 to adjust the rotation speed of the inhaling fan 113. By adjusting the rotation speed of the inhaling fan 113, it is possible to control the flow speed of the intake air inhaled into the liquid storage 120. Therefore, by controlling the flow speed of the intake air, it is possible to adjust an upwelling degree of the liquid and a rate of collecting the contaminants contained in the intake air. For example, when the intake air contains a large amount of contaminants, the controller 160 controls the driving motor 112 to increase the flow speed of the intake air, thereby temporarily increasing the rate of collecting the contaminants. On the other hand, when the intake air contains a small amount of contaminants, the controller 160 controls the driving motor 112 to decrease the flow speed of the intake air, thereby temporarily decreasing the rate of collecting the contaminants. For example, the controller 160 for controlling the driving motor 112 and the controller 160 for controlling the rotary driver 140 may be combined into a single controller.

According to an embodiment, the air discharger 150 may include a pipelike partition wall 151 extending toward the inside of the liquid storage 120. For example, the pipelike partition wall 151 may include a pipelike member, the crosssection of which has various shapes such as a circle and a polygon. The pipelike partition wall 151 serves to physically separate the intake air inhaled through the air inhaler 110 not to mix with the purified are from which the contaminants are removed by the liquid of the liquid storage 120. Therefore, the intake air with the contaminants is prevented from being discharged to the outside via the air discharger 150 without coming into contact with the liquid of the liquid storage 120.

According to an embodiment, the wave vortex air purifier 100 may further include a cooler 180 to lower the temperature of the liquid accommodated in the liquid storage 120. For example, as shown in FIG. 2, the cooler 180 may be provided outside the liquid storage 120 (e.g., in the first housing 101) . Alternatively, the cooler 180 may be installed inside the liquid storage 120 (e.g., on the bottom wall 121) . The cooler 180 may lower the vapor pressure of the liquid in the liquid storage 120, thereby reducing the repelling force of the contaminants from the intake air toward the surface of the liquid. Therefore, the rate of collecting the contaminants from the intake air is improved.

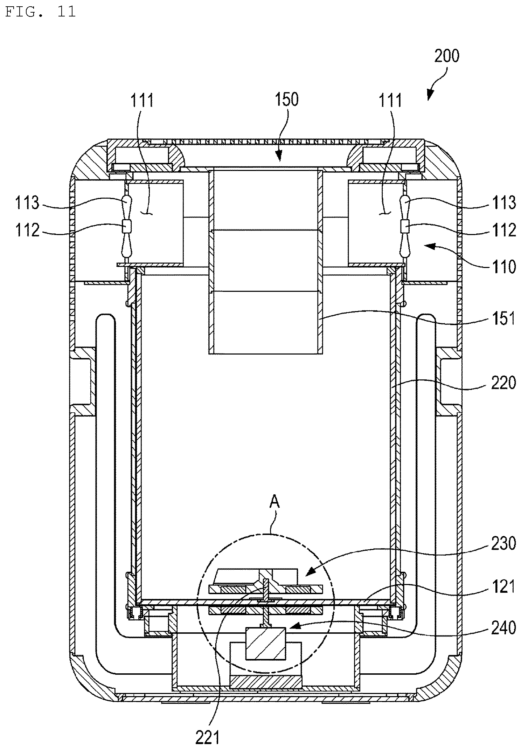

FIG. 11 is a cross-sectional view illustrating a wave vortex air purifier according to another embodiment of the disclosure.

Referring to FIG. 11, a wave vortex air purifier 200 according to another embodiment of the disclosure includes an air inhaler 110, a liquid storage 220, a liquid fluidizer 230, a rotary driver 240, and an air discharger 150. Because the air inhaler 110 and the air discharger 150 of the wave vortex air purifier 200 according to this embodiment have the same or similar configurations to the air inhaler 110 and the air discharger 150 of the wave vortex air purifier 100 according to the embodiments shown in FIGS. 1 to 10, detailed descriptions thereof will be omitted, and like numerals refer to like elements. Further, when the liquid storage 220, the liquid fluidizer 230, and the rotary driver 240 of the wave vortex air purifier 200 according to this embodiment have the same or similar functions as the liquid storage 120, the liquid fluidizer 130, and the rotary driver 140 of the wave vortex air purifier 100 according to the embodiments shown in FIGS. 1 to 10, detailed descriptions thereof will be omitted. Various embodiments of the elements in the wave vortex air purifier 100 according to the embodiments shown in FIGS. 1 to 10 may be equally or similarly applied to those of the wave vortex air purifier 200 according to this embodiment. Below, descriptions will be made focusing on the liquid storage 220, the liquid fluidizer 230, and the rotary driver 240.

The liquid storage 220 may be provided as a container of which a bottom wall 221 is closed. Therefore, the liquid storage 220 may be provided as a container of which the bottom wall 221 is closed. The liquid storage 220 includes a supporting shaft 222 formed protruding from the bottom wall 221. The liquid fluidizer 230 may be configured to rotate around the supporting shaft 222 of the liquid storage 220. Therefore, it is not necessary to install a rotary shaft penetrating the bottom wall 221 of the liquid storage 220, thereby completely preventing the liquid from leaking out of the liquid storage 220. Further, there is no need of installing a sealing member between the bottom wall 221 of the liquid storage 220 and the rotary shaft, thereby preventing or minimizing the rotational driving force generated by the rotary driver 240 from being decreased due to friction between the bottom wall 221 and the rotary shaft.

The liquid fluidizer 230 may be configured to rotate the liquid in the liquid storage 220 or may be configured to cause the upwelling phenomenon while rotating the liquid. The liquid fluidizer 230 may be variously configured according to the embodiments shown in FIGS. 1 to 10 to rotate the liquid and cause the upwelling phenomenon.

The rotary driver 240 is placed outside the liquid storage 220 and configured to rotate the liquid fluidizer 230 as being spaced apart from the liquid fluidizer 230. In other words, the rotary driver 240 is configured to transmit the rotational driving force to the liquid fluidizer 230 without contact. The rotary driver 240 may be placed in the first housing 101.

According to an embodiment, the rotary driver 240 may include a rotational driving motor 241 having the rotary shaft, and a driving plate 242 coupled to the rotary shaft and configured to rotate. The driving plate 242 is configured to interact with the liquid fluidizer 230 and transmit the rotational driving force from the rotational driving motor 241 to the liquid fluidizer 230. For example, the liquid fluidizer 230 may be configured to rotate together with the driving plate 242 by magnetic attraction between the liquid fluidizer 230 and the driving plate 242. In this way, the rotational driving force is contactlessly transmitted between the liquid fluidizer 230 and the driving plate 242, thereby maximizing the sealing performance of the liquid storage 220 and minimizing the friction loss in the rotational driving force.

According to an embodiment, the wave vortex air purifier 200 may further include a magnetic body 260 coupled to one of the liquid fluidizer 230 and the driving plate 242, and a metal member 270 coupled to the other of the and the liquid fluidizer 230 and the driving plate 242. Alternatively, the magnetic bodies may be provided in both the liquid fluidizer 230 and the driving plate 242, and the magnetic body provided in the liquid fluidizer 230 and the magnetic body provided in the driving plate 242 may be disposed to have magnetic attraction therebetween.

According to an embodiment, the magnetic body 260 may be coupled to one of a lower surface 231 of the liquid fluidizer 230 and an upper surface 242a of the driving plate 242, and the metal member 270 may be coupled to the other of the lower surface 231 of the liquid fluidizer 230 and the upper surface 242a of the driving plate 242. Because the magnetic body 260 or the metal member 270 is placed on the lower surface 231 of the liquid fluidizer 230 and the upper surface 242a of the driving plate 242, the liquid fluidizer 230 and the driving plate 242 may have magnetic attraction effective for each other. Therefore, it is possible to minimize the loss of the rotational driving force generated by the rotary driver 240.

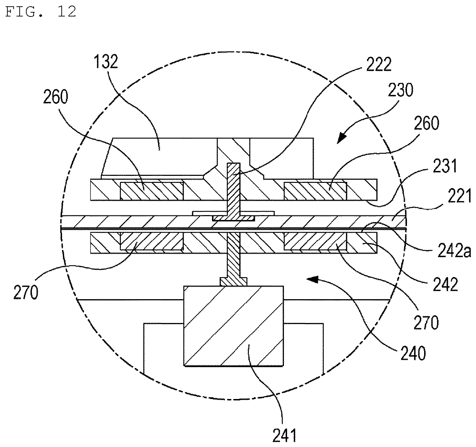

FIG. 12 is a partial enlarged view taken from 'A' shown in FIG. 11.

According to an embodiment, the magnetic body 260 may include a plurality of magnetic bodies 260 coupled to one of the lower surface 231 of the liquid fluidizer 230 and the upper surface 242a of the driving plate 242 and disposed to be spaced apart from each other along a circumferential direction, and the metal member 270 may include a plurality of magnetic members 270 coupled to the other of the lower surface 231 of the liquid fluidizer 230 and the upper surface 242a of the driving plate 242 and disposed to be spaced apart from each other along a circumferential direction. In FIG. 12, the magnetic body 260 is coupled to the liquid fluidizer 230, and the metal member 270 is coupled to the driving plate 242. In this way, the plurality of magnetic bodies 260 and the plurality of metal members 270 are installed to increase the magnetic attraction between the liquid fluidizer 230 and the driving plate 242. Therefore, it is possible to further minimize the loss of the rotational driving force generated by the rotary driver 240.

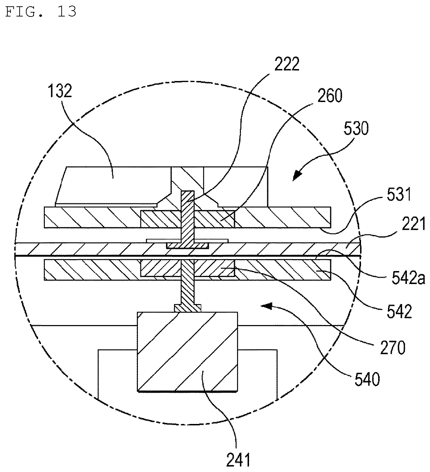

FIG. 13 is a partial cross-sectional view illustrating a liquid fluidizer and a driving plate according to another embodiment.

According to an embodiment, the magnetic body 260 may be coupled to the center of one of a lower surface 531 of a liquid fluidizer 530 and an upper surface 542a of a driving plate 542, and the metal member 270 may be coupled to the center of the other of the lower surface 531 of the liquid fluidizer 530 and the upper surface 542a of the driving plate 542. In FIG. 13, the magnetic body 260 is coupled to the liquid fluidizer 530, and the metal member 270 is coupled to the driving plate 542. In this way, the single magnetic body 260 and the single metal member 270 are installed at the centers, and it is thus easy to install the magnetic body 260 and the metal member 270 in the liquid fluidizer 530 and the driving plate 542.

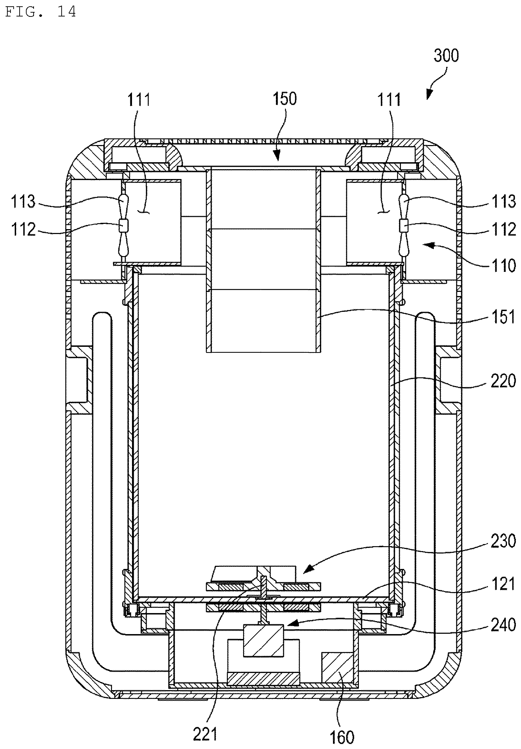

FIG. 14 is a cross-sectional view illustrating a wave vortex air purifier according to still another embodiment of the disclosure.

As shown in FIG. 14, a wave vortex air purifier 300 according to still another embodiment of the disclosure includes an air inhaler 110, a liquid storage 220, a liquid fluidizer 230, a rotary driver 240, an air discharger 150, and a controller 160. Because the elements of the wave vortex air purifier 300 according to this embodiment have the same or similar configurations to those of the wave vortex air purifiers 100 and 200 according to the embodiments shown in FIGS. 1 to 13, detailed descriptions thereof will be omitted, and like numerals refer to like elements.

The air inhaler 110 includes the driving motor 112, and the inhaling fan 113 configured to inhale air from the outside so that the inhaling fan 113 can swirl intake air. In other words, the air inhaler 110 is configured to forcibly introduce the intake air into the liquid storage 120 through the inhaling fan 113.

The liquid fluidizer 230 is configured to rotate the liquid in the liquid storage 220 in a direction opposite to the vortex direction of the intake air. Alternatively, the liquid fluidizer 230 may be configured to rotate the liquid or may be configured to cause an upwelling phenomenon while rotating the liquid. The liquid fluidizer 230 may be variously configured according to the embodiments shown in FIGS. 1 to 10 to rotate the liquid and cause the upwelling phenomenon.

The controller 160 controls the driving motor and the rotary driver so that the rotation speed of the intake air swirled by the inhaling fan 113 can be faster than the rotation speed of the liquid. To this end, the controller 160 is electrically connected to the driving motor 112 and the rotary driver 240. When the rotation speed of the swirled intake air is faster than the rotation speed of the liquid, the upwelling phenomenon may occur on the surface of the liquid.

Although the technical idea of the disclosure has been described by the foregoing embodiments and the examples shown in the accompanying drawings, it will be understood by a person having ordinary knowledge in the art, to which the disclosure pertains, various substitutions, modifications and alterations can be made without departing from the technical idea and scope of the disclosure. Further, it will be appreciated that such substitutions, modifications and alterations fall within the scope of the appended claims.

## Claims

1. A wave vortex air purifier comprising:
an air inhaler configured to inhale air from an outside;
a liquid storage configured to accommodate liquid for collecting contaminants contained in intake air inhaled through the air inhaler;
a liquid fluidizer placed inside the liquid storage and configured to rotate inside the liquid storage to rotate the liquid in the liquid storage and cause an upwelling phenomenon that a level of the liquid changes;
a rotary driver configured to rotate the liquid fluidizer; and
an air discharger configured to discharge purified air, from which the contaminants are removed, to the outside,
the liquid fluidizer comprising:
a rotary body comprising an upper surface inclined with respect to a bottom wall of the liquid storage and configured to be rotated by the rotary driver; and
a plurality of protrusions protruding from the upper surface and disposed as being spaced apart from each other along a circumferential direction of the upper surface, and
the rotary body comprising
a lower surface inclined with respect to the upper surface and parallel to the bottom wall.

2. The wave vortex air purifier of claim 1, wherein each of the plurality of protrusions comprises an inclined surface disposed to be inclined with respect to the upper surface and coming into contact with the liquid as the rotary body rotates.

3. The wave vortex air purifier of claim 1, further comprising a controller that controls the rotary driver to adjust a rotation speed of the liquid fluidizer.

4. The wave vortex air purifier of claim 1, further comprising an electric precipitator that electrically collects the contaminants.

5. The wave vortex air purifier of claim 4, wherein the electric precipitator comprises:
an ionizer disposed adjacent to the air inhaler and charging the contaminants; and
a collector cell configured to collect the contaminants charged in the ionizer based on electrostatic action.

6. The wave vortex air purifier of claim 5, wherein
the liquid storage comprises a cylindrical inner circumferential surface, and
the collector cell is disposed along the cylindrical inner circumferential surface so as to be at least partially immersed in the liquid as the liquid upwells.

7. The wave vortex air purifier of claim 6, wherein the collector cell is disposed on the cylindrical inner circumferential surface between a maximum level of the liquid and a minimum level of the liquid due to the rotation of the liquid fluidizer.

8. The wave vortex air purifier of claim 1, wherein the air inhaler is configured to swirl the intake air in a direction opposite to a rotation direction of the liquid.

9. The wave vortex air purifier of claim 8, wherein
the liquid storage comprises a cylindrical inner circumferential surface, and
the air inhaler comprises an introducing inlet disposed so that the intake air can flow toward the cylindrical inner circumferential surface.

10. The wave vortex air purifier of claim 1, wherein the air inhaler comprises:
a driving motor comprising a rotary shaft; and
an inhaling fan coupled to the rotary shaft and configured to inhale air from the outside.

11. The wave vortex air purifier of claim 10, further comprising a controller that controls the driving motor to adjust a rotation speed of the inhaling fan.

12. The wave vortex air purifier of claim 1, wherein the air discharger comprises a pipelike partition wall extending toward an inside of the liquid storage.

13. The wave vortex air purifier of claim 1, further comprising a cooler configured to lower temperature of the liquid accommodated in the liquid storage.

14. A wave vortex air purifier comprising:
an air inhaler configured to inhale air from an outside;
a liquid storage configured to accommodate liquid for collecting contaminants contained in intake air inhaled through the air inhaler;
a liquid fluidizer placed inside the liquid storage and configured to rotate the liquid in the liquid storage;
a rotary driver disposed outside the liquid storage, spaced apart from the liquid fluidizer, and configured to rotate the liquid fluidizer; and
an air discharger configured to discharge purified air, from which the contaminants are removed, to the outside,
the liquid fluidizer comprising:
a rotary body comprising an upper surface inclined with respect to a bottom wall of the liquid storage and configured to be rotated by the rotary driver; and
a plurality of protrusions protruding from the upper surface and disposed as being spaced apart from each other along a circumferential direction of the upper surface, and
the rotary body comprising
a lower surface inclined with respect to the upper surface and parallel to the bottom wall.

15. The wave vortex air purifier of claim 14, wherein the rotary driver comprises:
a rotational driving motor comprising a rotary shaft; and
a driving plate coupled to the rotary shaft and configured to rotate.

16. The wave vortex air purifier of claim 15, wherein the liquid fluidizer is configured to rotate together with the driving plate by magnetic attraction between the liquid fluidizer and the driving plate.

17. The wave vortex air purifier of claim 16, further comprising:
a magnetic body coupled to one of the liquid fluidizer and the driving plate; and
a metal member coupled to the other of the liquid fluidizer and the driving plate.

18. The wave vortex air purifier of claim 17, wherein
the magnetic body is coupled to one of a lower surface of the liquid fluidizer and an upper surface of the driving plate, and
the metal member is coupled to the other of the lower surface of the liquid fluidizer and the upper surface of the driving plate.

19. The wave vortex air purifier of claim 18, wherein
the magnetic body comprises a plurality of magnetic bodies coupled to one of the lower surface of the liquid fluidizer and the upper surface of the driving plate and disposed to be spaced apart from each other along a circumferential direction, and
the metal member comprises a plurality of metal members coupled to the other of the lower surface of the liquid fluidizer and the upper surface of the driving plate and disposed to be spaced apart from each other along a circumferential direction.

20. A wave vortex air purifier comprising:
an air inhaler comprising a driving motor and an inhaling fan for inhaling air from an outside, and configured to swirl intake air through the inhaling fan;
a liquid storage configured to accommodate liquid for collecting contaminants contained in the intake air inhaled through the air inhaler;
a liquid fluidizer placed inside the liquid storage and configured to rotate the liquid in the liquid storage in a direction opposite to a swirling direction of the intake air;
a rotary driver configured to rotate the liquid fluidizer;
an air discharger configured to discharge purified air, from which the contaminants are removed, to the outside; and
a controller configured to control the driving motor and the rotary driver so that a rotation speed of the intake air swirled by the air inhaling fan can be faster than a rotation speed of the liquid,
the liquid fluidizer comprising:
a rotary body comprising an upper surface inclined with respect to a bottom wall of the liquid storage and configured to be rotated by the rotary driver; and
a plurality of protrusions protruding from the upper surface and disposed as being spaced part from each other along a circumferential direction of the upper surface, and
the rotary body comprising
a lower surface inclined with respect to the upper surface and parallel with the bottom wall.
